# EUROPEAN PATENT APPLICATION

(11) **EP 3 644 395 A1**
(43) Date of publication of application: **29.04.2020**
(21) Application number: 18075014.3
(22) Date of filing: 22.10.2018
(51) Int. Cl.: H01M 2/10, B65D 88/00

(54) **BATTERY ENERGY STORAGE SYSTEM ARCHITECTURE**

(71) Applicant: Sozen, Murat, 3550 Heusden-Zolder (BE)
(72) Inventor: Sozen, Murat, 3550 Heusden-Zolder (BE)

(57) **Abstract**

An autonomously operable and fully integrated Energy Storage System Architecture, otherwise referred to by its abbreviation ESSA, built up around active use of battery pack modules primarily developed for automotive applications, functioning as energy storage medium inside Electrified Vehicles otherwise known as EV's, after their first application reaches end of life status.

The ESSA aims to repurpose used battery pack modules primarily to extend their functional lifetime and secure sustainable reuse, postponing recycling by many years.

By making effective reuse of various battery pack modules from different OEM's for second life applications as subsystem within a larger industrially integrated energy storage system, it allows the end user to store and consume energy on demand. Advantageously, the ESSA does not limit itself to used battery pack modules however, as it can make use of new battery pack modules for the same purpose.

## Description

### Technical Field

The current invention relates to an autonomously operable and fully integrated Energy Storage System Architecture, otherwise referred to by its abbreviation ESSA, built up around active use of battery pack modules primarily developed for automotive applications, functioning as energy storage medium inside Electrified Vehicles otherwise known as EV's, after their first application reaches end of life status.

The objective of the current invention is to provide a fully integrated ESSA, more particularly by making use of various types of battery pack modules sourced from different OEM's, with the ability to work jointly together.

Effective repurposing of these battery pack modules for second life applications as subsystem within a larger industrially integrated energy storage system, otherwise referred to as energy storage plant or facility, allowing storage and usage of energy on demand as preferred by the end user.

Advantageously, the ESSA aims to repurpose used battery pack modules primarily to extend functional use of the battery pack modules and secure sustainable reuse, postponing recycling by many years.

The ESSA does not limit itself to used battery pack modules however, as it can make use of new battery pack modules for the same purpose.

### Background Art

Conventional battery driven energy storage systems are not uncommon and in use since 1976 in several application areas, ranging from battery plants to UPS systems.

Conventional battery driven energy storage applications are mostly tailor made for a certain application, starting from new battery pack modules that are specifically developed for that purpose.

From experience, such conventional systems exhibit limitations in terms of effective use of operational space, expressed as energy density ratio in kilowatt hours per cubic meter (kWh per m³).

### Summary of invention

The current invention provides an industrial alternative with improved performance, referring to the storage capacity of the ESSA, effectively translated to kWh per m³, with improved convenience for the end user while operating the system.

An objective of the current invention is to provide a fully integrated ESSA for a multitude of applications and sectors improving:
1. the ability to easily and reliably scale the storage capacity, by reducing or expanding the system, as expressed by the end user
2. a modular architecture which enables various possible configurations;
3. the operating system architecture by incorporating machine learning intelligence;
4. the ability to remain safely operable when exposed to potential hazardous phenomena, such as exposure to effects of an earthquake amongst others;
5. and the ability to be configurated as multiple system arrangement, stacked multiple levels high, often exceeding height limitations set by conventionally dimensioned factories.

Another objective is active repurposing of battery pack modules by prolonging the economic lifetime of used battery pack modules, after reaching end-of-life within their first application, postponing costly and often environmentally unfriendly recycling processes by many years.

The basis is to reuse battery pack modules from different OEM's, incorporated into a fully integrated energy storage system capable of operating a multitude of different battery pack module architectures, making various configurations possible.

The ESSA is fully modular and allows to be put into operation as a standalone single unit, and easily expandable to become an integrated storage system comprising of multiple units, thus configurated as multiple system arrangement.

The ESSA improves effective use of operational space through its modular architecture, as each storage unit is integrated as a box-in-frame structure making use of ISO compliant open shipping frame containers, allowing multiple units to be packed densely adjacent to each other, with the ability to stack safely up to about 9 units high.

The ESSA enables on-grid integration, as well as autonomous off-grid applications.

To achieve the objective mentioned above for the invention referred to as ESSA, the present invention provides a methodical system enabling optimal capacity in terms of kWh per m³.

The Energy Storage System depicted as a unit comprises the following key attributes:
1. the outer shell, otherwise referred to as outer box or outer body or outer frame, of the box-in-frame construction, where the outer body consists of a frame design, fully compliant with design regulations as prescribed for the intended purpose a regular ISO open frame shipping container is expected to fulfil, specifically tailored to this application;
2. the inner shell, otherwise referred to as inner box or inner body, within the box-in-frame system architecture, where the inner body consists of the box shaped casing that safely envelops the separate storage carriers, safely shielding off the high voltage battery storage systems;
3. the vibration insulation system, mechanically connecting the inner body within the outer body, actively reducing, and ideally eliminating unwanted effects associated with exposure to sources of vibration, which can influence the performance of the entire system, ultimately leading to shortened lifetime of the system. The vibration insulation system consists of several devices that make use of integrated shock absorbers, air mounts, dampers, spring mounts or equivalent alternatives with a similar functional performance;
4. vertically suspended carriers incorporating equipment to operate the system, otherwise referred to as Power Control Carrier otherwise referred to by its abbreviation PCC;
5. vertically suspended carriers intended for storage of multiple battery pack modules otherwise referred to as Power Storage Carrier otherwise referred to by its abbreviation PSC;
6. power interrupters for each carrier to disengage active power connection from the system to assure safe working when personnel interaction with the system is required;
7. multitude of various battery pack modules integrated within each of the PSC's;
8. the advanced battery management system enabling real time supervision and control of the system, comprising of a multitude of battery pack modules incorporated within the ESSA. The objective of continuous monitoring and performance optimization of each of the battery pack modules is to assure a safe operating condition is established, resulting in the improvement of the overall lifespan of each of the battery pack modules within the ESSA;
9. the advanced thermal management system enabling real time supervision and control of the system, actively measuring and registering temperature variations. The objective of continuous monitoring and performance optimization of each of the battery pack modules is to assure a safe operating condition is established, resulting in the improvement of the overall lifespan of each of the battery pack modules within the ESSA;
10. the multi axis external interlocking connector, specifically tailored to this application to establish easy multi directional power connection with external power supply sources and consumers on the one hand, and to establish connectivity between several ESSA's when configured within a multiple system arrangement on the other hand. This interlocking connector is uniquely versatile enabling easy Plug and Play connection, by enabling multi-axis orientation to establish connection to adjacent energy storage system units;
11. a mechanical rail system, connecting the PCC or PSC to the inner body, with the objective to improve ergonomics, i.e. making the PCC or PSC easily moveable and accessible;
12. the tailored cable routing system, otherwise referred to as mechanical spine, safely encloses the wiring harnesses that establish power and data connection between adjacent PCC's and PSC's within the inner body. Outside of normal operation conditions, each of the individual PCC's and PSC's enable easy extraction from the enclosed inner body, by pulling them outwards, hereby becoming accessible for personnel interaction. Advantageously, the cable routing system assures optimal connectivity of the wiring harnesses, regardless of the carrier position;
13. cable wiring harnesses otherwise referred to as spinal cord, establishing power and data connection, incorporated into mechanical spine;
14. faciliatory additions such as integrated stairwells and platforms for personnel movement to conduct inspection and maintenance activities;
15. advanced diagnostic functionalities and capabilities at least like Internet of Things, augmented and virtual reality, big data, machine learning, artificial Intelligence (Al);
16. advanced monitoring and control software to assure safe operation of the system;
17. and thermal energy recuperation system to repurpose heat generated by the system, for secondary heating of other appliances.

### Technical Problem

Problem 1: Various independent studies show an increasing uptake of EV' s gradually claiming market share from conventional Internal Combustion Engine driven vehicles, otherwise referred to by its abbreviation ICE.

These studies predict exponential growth in upcoming years for battery driven EV's which in turn will replace conventional ICE driven vehicles. Outcome of this exponential growth will result in increasing amounts of battery pack modules that will become available when the EV reaches its end of life. Instead of opting for recycling of these battery pack modules, other applications could benefit from these battery pack modules once they are converted and regenerated, postponing the often environmentally unfriendly recycling processes.
Problem 2: The expected uptake of EV's, requires increased availability of electricity globally. Increasing production capacity will compensate for the demand only partially, as adequate storage of electricity produced remains limited. Availability of electricity needs to be safeguarded continuously by effectively balancing and stabilizing demand and supply. It is expected that existing production capacity from power plants supplying electricity will become insufficient to fulfil demand for the near future.
Problem 3: Existing battery energy storage systems currently in use, and new battery energy storage systems under development, are developed often in close cooperation with automotive OEM's, suffering from a distinct disadvantage as they rely on a specific battery technology, closely linked to the OEM's preference. The inability to combine various battery pack modules, decreases flexibility and increases dependence from the various OEM's supplying them, which leads to monopolization.
Problem 4: Current battery energy storage systems on the market do not consider optimal use of often expensive operational space, in which they are placed. This limitation can translate to the energy density ratio.
Problem 5: Ability to sustainably reuse the battery pack modules to decrease the carbon footprint of batteries because premature recycling will unnecessarily increase the carbon footprint of each battery.
Problem 6: Suitability of current battery energy storage systems are tailored to a specific application. A Modular Battery ESSA fit for a wide array of applications in various fields of operation does not exist.
Problem 7: Ability to easily deploy the Modular Battery ESSA, with limited complexity and short lead time from installation to start-up operation
Problem 8: Ability to expand capacity of the Modular ESSA without disruption of other systems in operation.
Problem 9: Ability to deploy the Modular Battery ESSA, in rough environments (i.e. deserts, forests or areas affected by natural disasters etc) where availability and/or access to electricity is limited or not feasible.
Problem 10: Ability to regenerate the battery pack modules performance to capacity levels adequate for prolonged static storage of electricity does not exist for all OEM's
Problem 11: Ability to eliminate power shortage or complete power outage scenario's, in regions where supply of electricity can be limited, does not exist globally.

### Solution to Problem

Solution to problem 1: The objective of the current invention is to prolong the lifetime of used battery pack modules from EV's by repurposing these battery pack modules after reaching end-of-life within their intended first application. Battery pack modules losing storage capacity over the intended lifetime of their first application, will be restored to capacity levels, adequate for static storage within the Modular Battery ESSA, and fulfilling a second lifetime within this second application. Environmental effects are reduced drastically by increasing the economic lifetime of the battery pack modules.

Solution to problem 2: The objective of the current invention is to bring the Modular Battery ESSA into operation as energy storage buffer, autonomously, or connected to the energy grid will simplify balancing available energy supply and actual consumption, when power plants cannot fulfil demand fully. Energy generated by fossil fuel driven powerplants, nuclear powerplants, as well as sources of renewable energy, such as but not limited to solar power, wind power, geothermal, hydropower will benefit from a battery energy storage system.

The ability to uphold the production of electricity from various sources and consequently store oversupply of electricity into energy storage buffers, referring to use of the Modular Battery ESSA, assures companies from various sectors that rely on continuous energy coverage to keep their critical production processes in operation. Same logic applies to facilities falling under the health care industry, such as hospitals, medical laboratories, research institutes and pharmacies amongst others, where power outage can have detrimental consequences.

Solution to problem 3: The objective of the current invention is to provide an ESSA with the ability to combine various battery pack modules and working jointly together, while safely integrated inside the Modular Battery ESSA. Complexity lies in effective integration of battery pack modules from various OEM's taking into consideration these differ in terms of but not limited to architecture, battery chemistry, storage capacity, communication and connectivity, packaging dimensions or weight.

The principle comes down to use of a peg board, acting as versatile and modular support frame, to enable easy installation of various battery systems in various configurations. It is evident that this will be in compliance with industrial standards.

Advantageously, standardizing such use of a modular support frame concept, enables a simplified industrialization process, with more effective cost benefits, and increased quality control.

Solution to problem 4: The objective of the current invention is to effectively make use of the available space. Within the predefined space of one energy storage system unit, equal to the dimensions of a standardized ISO open frame shipping container, the objective is to obtain the highest energy density ratio. Advantageously, making use of proven ISO open frame shipping container design, the Modular Battery ESSA enables stacked storage, keeping the m² footprint limited, by making effective use of height, which is often not considered in conventionally dimensioned factories.

Solution to problem 5: The objective of the current invention is to reduce the contributing effect, expressed as carbon footprint of each battery pack module integrated within ESSA, by extending the lifetime duration beyond its initial application lifetime duration, by several years by using the Advanced Battery Management System, otherwise referred to by its abbreviation ABMS ®.

Solution to problem 6: The objective of the current invention is to provide an ESSA that enables integration of a wide variety of different battery pack modules. This system will increase user flexibility and enable multiple configurations and solutions to be provided, tailor-made for each application.

Solution to problem 7: The objective of the current invention is to reduce cost of transportation and installation of the energy storage system, often associated with equipment of similar size, by actively reducing complexity of both aspects. By making effective integrating the use of the ISO open frame shipping container design, as outer frame, means for effective packaging is secured.

Solution to problem 8: The objective of the current invention is to enable expansion of the existing energy storage system, during regular operation of surrounding systems. Ease of installation and commissioning without interruption to surrounding systems, is achieved by the modularity of the system and ease of connecting adjacent energy storage systems with each other.

Solution to problem 9: The objective of the current invention is to enable easy deployment of energy storage systems in regions considered as remote or inhospitable. Due to the compact, yet modular and robust design, making use of proven ISO open frame shipping container design for the outer frame, numerous transportation methods can be considered. The energy storage system can withstand harsh environments because of its robust design.

Solution to problem 10: The objective of the current invention is to actively regenerate performance of battery pack modules to capacity levels adequate for prolonged static storage of electricity.

Solution to problem 11: The objective of the current invention is to guarantee continuous supply of electric energy to the consumer, hereby eliminating power shortage scenario's, in regions where supply of electric energy is considered limited, for extended periods of time.

The expansion of electric energy storage capacity can be achieved by installation of the energy storage system, when buffering of electric energy is appropriate.

The scalable nature and modular design of the ESSA allows easy installation and expansion at locations where capacity of electric energy cannot be guaranteed, and the possible event of energy shortage requires compensation of such.

### Advantageous effect of invention

Established OEM's within the battery development industry offer energy storage systems, built up specifically around their key technology in terms of battery pack architectures, limiting system flexibility. Advantageously, the current invention, through thorough standardization of the storage system infrastructure, can incorporate a multitude of different battery pack modules. The ability to combine battery pack modules from various OEM's and from various applications, assures limitless supply of battery pack modules, from various OEM sourced suppliers. Advantageously, various combinations can be configurated with various battery pack modules tailored to the wishes of the end customer.

Ability to create self-sustaining energy infrastructures by use of ESSA as storage medium for sources of renewable energy.

Ability to stabilize the power grid infrastructure by use of ESSA as storage medium enabling extended storage of abundant energy capacity produced in periods of limited consumption, made readily available in periods of increased consumption but with limited energy capacity, hereby actively balancing the consumption of energy and advantageously gaining the ability to positively compensate for peak consumption at increased cost for the end user. Even western countries are threatened by power outage scenario's in 2018 due to imbalance of increasing energy consumption and insufficient means to effectively compensate for increased capacity requirements from the power grid.

Ability to decentralize power supply sources to the power grid. Instead of relying on strategically located power plants each supplying energy to dedicated larger areas, the ESSA in a multiple system arrangement can support or replace conventional power plants even. Instead of using a couple of big plants to foresee energy over an entire country or area, it Advantage lies in the ability to decouple the dependency of large power plants, by configuration the ESSA in a multiple system arrangement as decentral power plants, improving stable supply to the power grid.

The energy density ratio in kilowatt hours per cubic meter (kWh per m³) is considerably higher than existing supplier-specific systems considered as benchmark.

Advantageously, the system architecture of ESSA, eliminates active use of sensitive mechanical components, often prone to wear and tear, for use in within primary functions of the systems. Moving components only pertain to secondary functions.

Advantageously, optimizing the allowed loading capacity, otherwise referred to as payload, within the boundaries set by applicable regulations for container transport associated with use of the ISO open frame shipping container under normalized conditions, is effectively optimized and assured by integration of the outer frame within the design of the integral system.

Advantageously, a multitude of readily available shipping methods exist, making the transport of the energy storage system possible within a global setting, to the most remote areas, over land, by sea and by air.

Ability to quickly deploy, install and commission, one or more ESSA's is to be considered as benchmark best practice, because of the prefabricated mechanical box-in-frame structure, and effective use of ourmulti axis connector system for easy interoperability, simplifying the ease to make multiple ESSA's work collectively together, in accordance with the Plug and Play principle.

Ability to endure harsh environments with guaranteed performance, through the robust design of ESSA, making complex transportation possible, without negatively affecting the integrity of the system, for instance by damages incurred during transport.

It is to be understood that both the foregoing general description and the following detailed description are exemplary and are intended to provide further explanation of the invention as claimed. Other advantages and features of the invention will be apparent from the following description, drawings and claims.

### Brief description of drawings

The features of the invention believed to be novel, are set forth with particularity in the appended claims. The invention itself, however, may be best understood by reference to the following detailed description of the invention, which describes an exemplary embodiment of the invention, taken in conjunction with the accompanying drawings.

The invention referred to as Energy Storage System makes use of a distinctive Architecture, hence the reference to ESSA, comprising of several components, of which the composition is believed to be novel, explicated hereinafter:
FIG. 1: Illustrates a perspective view of the ESSA, depicted as single system arrangement;
FIG. 2A and B: Illustrate an exploded perspective view of the ESSA, depicted single system arrangement;
FIG. 3: Illustrates an enlarged perspective view of the Outer frame;
FIG. 4 A: Illustrates an enlarged perspective view of the Inner body front view;
FIG. 4 B: Illustrates an enlarged perspective view of the Inner body back view;
FIG. 5: Illustrates an enlarged perspective view of the mechanical spine;
FIG. 6: Illustrates an enlarged perspective view of the PCC and PSC;
FIG. 7: Illustrates an exploded perspective view of the PCC and PSC;
FIG. 8: Illustrates an enlarged perspective view of the carrier frame;
FIG. 9: Illustrates an enlarged perspective view of the modular support frame;
FIG. 10A and B: Illustrate a perspective view of the ESSA, depicted as multiple system arrangement, multi-level stacked configuration;
FIG. 11A and B: Illustrates a perspective view of the ESSA, depicted as multiple system arrangement, single level laterally connected configuration;
FIG. 12A and B: Illustrates a perspective view of the ESSA, depicted as multiple system arrangement, multi-level stacked and laterally connected configuration;
FIG. 13: Illustrates an enlarged perspective view of the pedestrian platform;
FIG. 14A and B: Illustrate a perspective view of the ESSA, depicted as multiple system arrangement, multi-level stacked and laterally connected configuration, with enclosed pedestrian platform.

### Description of embodiments

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

Reference will now be made to the drawing figures to describe the present invention in detail.

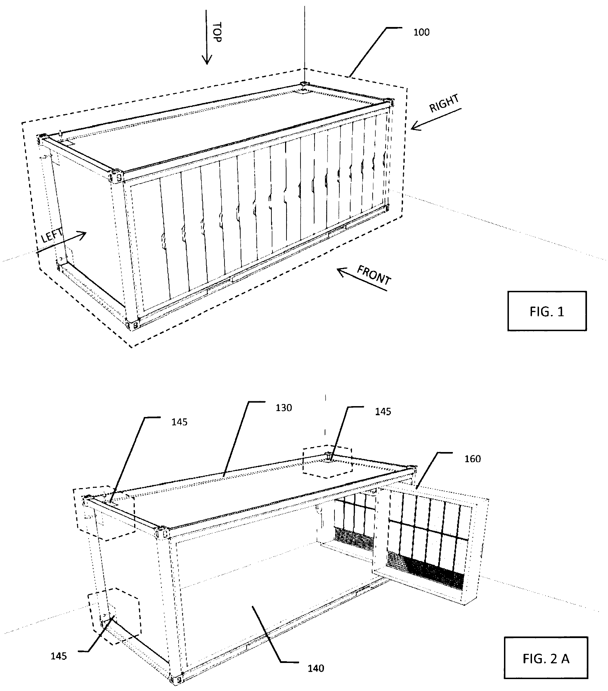

Reference is made from FIG. 1 representing a perspective view of the ESSA, depicted as single system arrangement, for which the system 100 once put into operation, becomes an autonomously integrated Energy Storage System Architecture, for the end user.

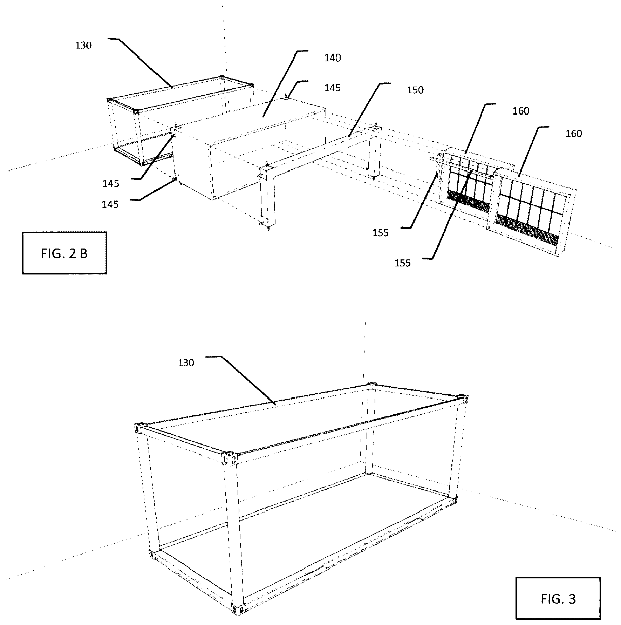

References are made from FIG. 2A and B representing an exploded perspective view of the ESSA, depicted as single system arrangement, visualizing the architecture of the system 100, comprising of several key components, to be explained further in the following paragraphs.

Starting from the outside, the outer frame 130 fulfils a dual purpose, in which it primarily secures adequate protection for all the internal components, hereby securing the functional performance of the entire system 100.

Secondary advantage is the added ability to interconnect frames, when set up in a multi system arrangement. The outer frame 130, designed in full compliance with requirements as specified for use of ISO shipping containers, allows the frame to be put under considerable load hereby adding rigidness in terms of functional strength of the frame.

As such, the inner body 140, to be considered as housing that accommodates all components that require to be shielded from its surrounding environment partially or completely depending on the functional nature of the component.

The inner body 140 is mechanically connected to the outer frame 130 via a supporting structure, equipped with a vibration insulation system, hereby ensuring the inner body 130 with all its sensitive internal components, remains adequately isolated from harmful external influences that are expected to have a degrading effect on the functional performance of the ESSA 100. Amongst harmful external influences one can consider environmental effects such as earthquake phenomena, or effects from nearby located industrial equipment that generate vibration for instance.

The inner body 140, shields all internal components from the surrounding environment, in accordance with the IP grade associated with high voltage equipment exposed to the outside environment.

Looking more closely onto the internal components within the inner body 140, it always remains a crucial precondition to ensure safe operation. To fulfil this precondition, increased attention in terms of safe storage and operation is secured by design, and herein the functional character of ESSA becomes obvious.

At the rear of the inner body 140, to be placed at any of the four corners, the multi-axis connectors 145 foresees connectivity between the internal system and the outside world. The multi-axis connector 145 adds the functionality and flexibility to be placed at any of the four corners, with the advantage it can be oriented within multiple degrees of freedom, hence the reference to multi axis connector. This freedom of orientation increases modularity and the ability to enable limitless different configurations with complex connectivity requirements, where connectivity needs to be established to outside power supply and power consumers amongst others, and other ESSA units 100, when part of a larger configuration.

The multi-axis connector 145 foresees in continues power transfer, while safely shielded from external exposure to human interaction by design, and hereby always ensures safe operation.

On the inside of the inner body 140, cable wiring going from the multi-axis connector 145 is safely routed within the cable routing infrastructure, referred to as the mechanical spine 150, located against the back wall.

In case of maintenance or other activities that require internal access to the system 100, within the inner body 140, the mechanical spine 150 foresees adequate mechanical shielding from external exposure to human interaction by design and hereby always ensures safe operation.

The mechanical spine 150 foresees in the cable routing infrastructure for the various cable wiring harnesses that will establish connection between the PCC 160 and PSC's 160, that drive the functional performance of the entire system 100.

The outer casing of the PCC 160 and PSC 160 concerns a carrier with a vertically configured storage function rather than the more common horizontally configured storage setup. This vertically designed carrier functions in a similar manner as a sliding drawer. For the vertically configured carrier setup these slider mechanisms are located at the top and bottom of the carrier, instead of at the sides as more commonly associated with horizontally configured storage.

The presence of sliders fulfils a crucial and functional precondition in that sense, as the PCC 160 and PSC 160 when in operation are fully enclosed within the inner body 140, safely shielded from human interaction. To enable controlled human interaction for service personnel to the internal components of the PCC 160 and PSC 160, the ability to linearly extend the carrier outwards, is fulfilled by such sliders. The sliders allow the carrier 160 to shift safely outside of the inner body, allowing access to the internal components.

With the added functionality of a sliding carrier 160, a mechanically robust connection needs to be established between the fixed mechanical spine 150, for the various cable wiring harnesses routed within this system 100, and each of the extendable PCC 160 and PSC 160 incorporated within inner body 140 of the ESSA 100.

This function is fulfilled by means of a cable chain routing device 155, that establishes adequate mechanical connection between a fixed connection on one side, being the mechanical spine 150, and the linear moving connection, for each PCC 160 and PSC 160.

Reference is made from FIG. 3 representing an enlarged perspective view of the outer frame 130, hereby referring to common use cases for conventional shipping container frames with equivalent load capacity and in full compliance with requirements as specified for use of ISO shipping containers.

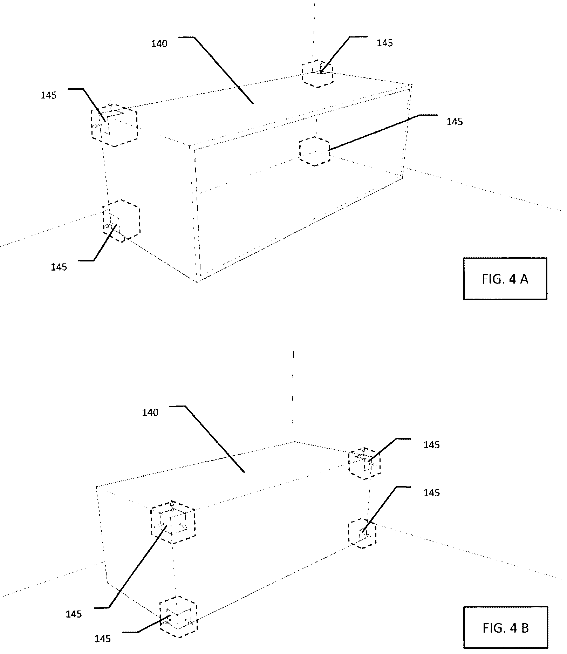

References are made from FIGS. 4A and 4B representing an enlarged perspective view of the inner body 140 where the location and the interaction of the multi-axis connector 145 with the inner body 140 is more clearly shown from the front view in FIG. 4A and from the rear view in FIG. 4B. The multi-axis connector 145 can be fitted at any of the four corners, dependant of the desired configuration of the ESSA 100, with the ability to orient freely within 3-axis range.

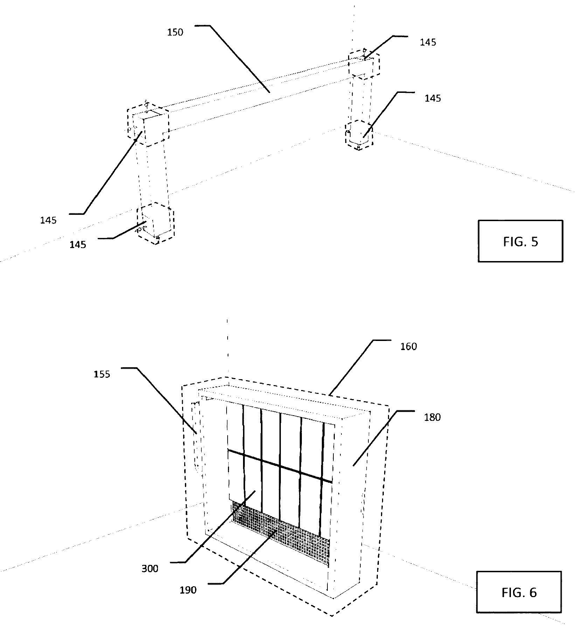

Reference is made from FIG. 5 representing an enlarged perspective view of the mechanical spine 150 where the location and the interaction of the multi-axis connector 145 with mechanical spine 150 is more clearly shown from the front side view. The mechanical spine 150 foresees adequate cable routing for the multitude of cable wiring harnesses which the system is equipped with.

Reference is made from FIG. 6 representing an enlarged perspective view of the PCC and PSC 160, each of which comprising of the key components such as control equipment and power electronics within the PCC 160, and a multitude of battery pack modules 300 within the several PSC's 160, both of which pertain to the intrinsic purpose of the ESSA 100, being efficient energy storage on demand.

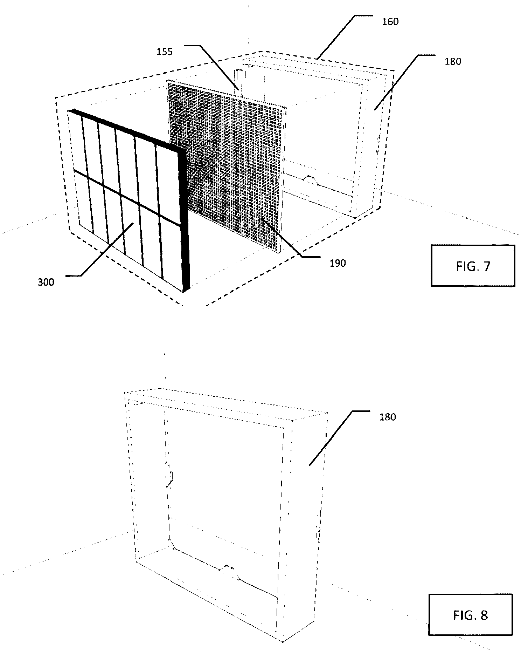

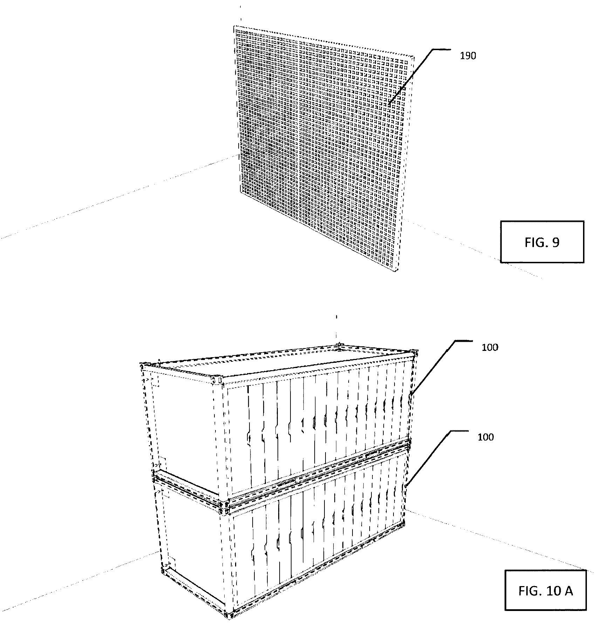

Reference is made from FIG. 7 representing an exploded perspective view of the PCC and PSC 160, clearly showing the layered structure of the carrier, comprising of the carrier frame 180, as shown in FIG. 8 on the outside, wherein the modular support frame 190 as shown in FIG. 9 as well is firmly fixed mechanically. The battery pack modules 300, applied merely as example in this figure, are fixed onto the modular support frame 190, via tailor made support brackets, for easy assembly as well as disassembly, in case extensive maintenance is required.

At the rear side of the carrier frame 180, connection is foreseen for a cable chain routing device 155.

Reference is made from FIG. 8 representing an enlarged perspective view of the carrier frame 180, as sub component within the carrier assembly, referred to as PCC and PSC 160, under FIG. 7

Reference is made from FIG. 9 representing an enlarged perspective view of the modular support frame 190, as sub component within the carrier assembly referred to as PCC and PSC 160, under FIG. 7

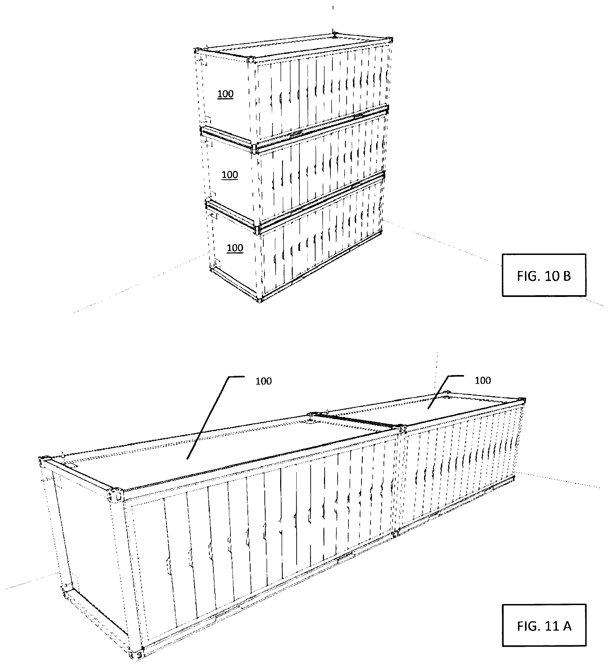

References are made from FIGS. 10A and 10B representing a perspective view of the ESSA 100, depicted as multiple system arrangement, multi-level stacked configuration. Merely meant as example, to show the modular character of each ESSA unit 100 and its ability to easily establish connection with adjacent ESSA units 100 by means of the multi-axis connector 145, accessible from all four corners of each unit. Advantageous about this architecture is the ease to stack each ESSA unit 100 multiple levels high, enabling flexible storage configurations tailored to each specific operational setting, with limited use of square meters of available floorspace.

Configuration as shown in FIG. 10A depicts a setup with two ESSA units 100 placed on top of each other, whereas the configuration as shown in FIG. 10B depicts a setup with three ESSA units 100 placed on top of each other. The limitation in terms of maximum number of units stacked on top of each other, depend on the load case for each unit, but similar conditions are to be taken into consideration for stacking loaded ISO shipping containers on top of each other. In most (if not all) cases the allowable height exceeds the available height dimensions of conventionally dimensioned factories.

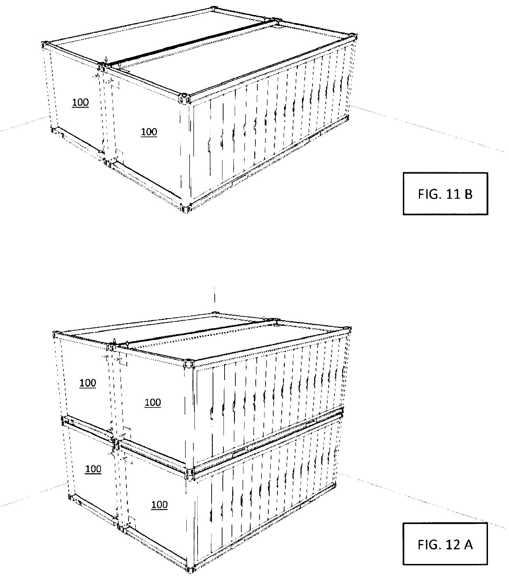

References are made from FIGS. 11A and 11B representing a perspective view of the ESSA 100, depicted as multiple system arrangement, single level laterally connected configuration. Again, this configuration is merely meant as example, to show the modular character of each ESSA unit 100 and its ability to easily establish connection with adjacent ESSA units 100 by means of the multi-axis connector 145, accessible from all four corners. This type of setup requires more square meters of floorspace.

Configuration as shown in FIG. 11A depicts a setup with 2 ESSA units 100 connected from the side, whereas the configuration as shown in FIG. 11B depicts a setup with two ESSA units 100 connected from rear to rear.

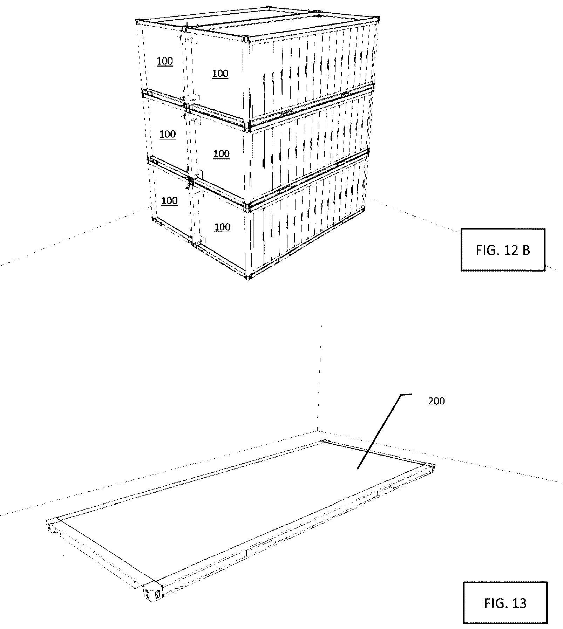

References are made from FIGS. 12A and 12B representing a perspective view of the ESSA 100, depicted as multiple system arrangement, multi-level stacked and laterally connected configuration. Again, this configuration is merely meant as example, to show the modular character of each ESSA unit 100 and its ability to easily establish connection with adjacent ESSA units 100 by means of the multi-axis connector 145, accessible from all four corners. In this example a combination is made to optimize storage within a conventionally dimensioned factory, in terms of height achievable, with limited claim in terms of floorspace.

Configuration as shown in FIG. 12A depicts a setup with four ESSA units 100 of which two units are connected rear to rear, consequently stacked two levels high, whereas the configuration as shown in FIG. 12B depicts a setup with six ESSA units 100 of which two units are connected rear to rear, consequently stacked three levels high.

Reference is made from FIG. 13 representing an enlarged perspective view of the pedestrian platform 200, as this additional attribute should be included in every stacked setup to allow access to the ESSA units 100 located above ground floor.

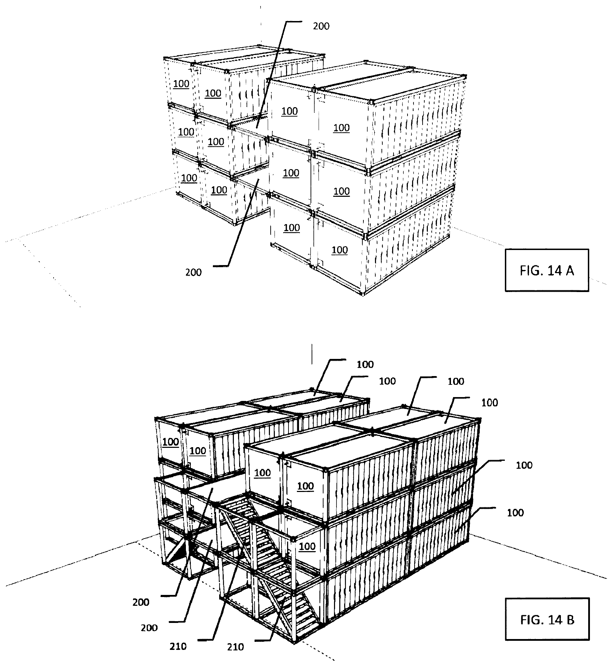

References are made from FIGS. 14A and 14B representing a perspective view of the ESSA 100, depicted as multiple system arrangement, multi-level stacked and laterally connected configuration, with enclosed pedestrian platforms 200, accessible via the integrated staircase units 210. Once again, this configuration is merely meant as example, to show the modular character of each ESSA unit 100 and its ability to easily establish connection with adjacent ESSA units 100 by means of the multi-axis connector 145, accessible from all four corners. In this example a combination is made with a doubled configuration as show in FIG. 12B, separated by the pedestrian platform, allowing easy access on each level.

Various configurations are possible, each tailored to the setting in which it will be deployed.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

### Industrial applicability

Effective repurposing of battery pack modules for second life applications as subsystem within a larger industrially integrated energy storage system, otherwise referred to as energy storage plant or facility, allowing storage and usage of energy on demand as preferred by the end user.

Application areas as summarized, but not limited to, are:
Industrial use: high energy consuming companies that could produce and store their energy, to be consumed only when increased demand calls for it.
Utilitarian use: buffer storage for powerplants to compensate for fluctuated production and demand.
Domestic use: Effective storage of generated electricity from solar panels f.i.
Humanitarian use: Effective storage of generated electricity for temporary or extended support to regions with limited means due to war or occurrence of natural disasters f.i.
By prolonging the lifetime of used battery pack modules, they could serve that purpose after proper conversion technology is made available. In development of this 'conversion technology' lies IP and patenting.

### Reference signs list

### Reference to deposited biological material

### Sequence listing free text

### Citation list

"Regulatory frameworks shall not only be targeting the EV battery materials supply chain, but also the end-of-life and material recycling processes, with the aim to facilitate cost reductions for battery recycling and to maximise the residual value of batteries at the end of their useful."

"The analyses benefit from an overview of the status and prospects for battery technologies that builds on the insights gained in a technical workshop on batteries for electric mobility convened by the IEA and the Electric Vehicles Initiative in March 2018.3"

"The workshop facilitated discussion of key topics related to battery development for automotive applications. Topics included: battery chemistry; technologies to scale up production; the likely evolution of materials demand; opportunities for second-life applications of automotive batteries and the recycling of materials."

### Patent literature

To align the power carriers inside the power container perfectly we make use of gap measuring system patent nr BE2018/5150

### Non-patent literature

Global_EV_Outlook_2018.pdf
The_Transition_to_a_ZEV_car_fleet_EU_2050_an_EAFO_study.pdf

## Claims

1. An energy storage system architecture (100), comprising: an outer frame (130); an inner body (140), to be considered as housing, is mechanically connected to the outer frame (130) via a supporting structure; a mechanical spine (150), to be considered as the cable routing infrastructure, is connected to the inner body (140); a power control carrier (160), to be considered as the general control system, is mechanically connected to the inner body (140), and electrically connected to the mechanical spine (150); one or more power storage carriers (160), to be considered as the actual energy storage device, are connected to the inner body (140), and electrically connected to the mechanical spine (150).

2. The energy storage system architecture in accordance with claim 1, wherein: the outer frame (130) is designed in full compliance with requirements as specified for use of ISO shipping containers; the inner body (140) is equipped with a vibration insulation system, and a configuration specific amount of multi-axis connectors (145), and is in accordance with the IP grade associated with high voltage equipment exposed to the outside environment; the mechanical spine (150) exists of an external frame, with internal cable wiring connected to the multi-axis connector (145), which will establish power and data connection between the PCC (160) and PSC's (160); the power control carrier (160) and the power storage carriers (160) are vertically designed and thus have a vertically configured storage function, comprising an outer casing referred to as carrier frame (180), industrial rail systems or sliders that make the carriers function in a similar manner as a sliding drawer which foresees the ability to linearly extend the carrier (160) outwards to allow the carrier to shift safely outside of the inner body allowing access to the internal components, a modular support frame (190) which is fixed mechanically to ensure sufficient supporting strength from within, a connection foreseen by means of a cable chain routing device (155) to establish a mechanical and electrical connection to the mechanical spine (150); the power control carrier (160) comprises but is not limited to a battery management system, a controller and supervisory control and data acquisition system for local and remote data communication, and a higher augmented or virtual reality layer; the power storage carriers (160) comprise of one or more, new or used, OEM independent EV sourced battery pack modules (300) or battery cells (300) or a combination hereof (300).

3. The energy storage system architecture in accordance with claim 2, wherein: the multi-axis connectors (145) to be placed at any of the four corners at the rear of the inner body (140), foresees connectivity within multiple degrees of freedom, with which connectivity can be established to outside power supply, power consumers, and possibly other ESSA units (100) which can be used as but not limited to a single system configuration, as well as multiple system configuration which can be multi-level stacked, or laterally connected, with the possibility of integrating enclosed pedestrian platforms (200) accessible via but not limited to the integrated staircase units (210); the cable chain routing device (155) functions as a mechanically robust connection between the fixed mechanical spine (150) and each of the extendable power control carrier (160) and power storage carrier (160) incorporated within the inner body (140).

4. A method for storing electrical energy into the apparatus of claim 1, said method comprising the steps of: connecting the apparatus to an energy supply, in the form of on-grid or off-grid energy supply, whereby on-grid energy supply can be referring to as electrical grid, and off-grid energy supply can be referring to renewable energy; whereby the energy in the form of electrical current will flow into the ESSA (100) via the multi-axis connectors (145); further flowing via the mechanical spine (150); further flowing via the cable chain routing device (155) to the PSC (160); Where the energy in the form of electrical current is stored onto a multitude of battery pack modules (300), wherein the PCC (160) controls the ESSA (100); The previous describes the process flow for energy storage, and in reverse order the same process applies for consumption of electrical energy, whereby energy in the form of electrical current will be flowing reversely from the PSC (160) via the cable chain routing device (155) to the PCC (160); further flowing reversely back to the mechanical spine (150); Whereby the energy in the form of electrical current will flow reversely out of the ESSA (100) via the multi-axis connectors (145) to the external consumer.

5. The method of claim 4 further comprising the battery management system, otherwise referred to as BMS, in the PCC (160), wherein the BMS controls and manages the flow of electrical energy to the OEM independent rechargeable battery pack modules (300) or individual battery cells (300) in the ESSA (100), such as but not limited to charging the individual battery pack modules (300) or battery cells (300), protecting the individual battery pack modules (300) or battery cells (300) from operating outside of its safe operating conditions, data monitoring each individual battery pack module (300) or battery cell (300) inside the ESSA (100), and balancing each individual battery pack module (300) or battery cell (300).

6. The method of claim 5 further comprising the BMS in the PCC (160) in case of custom setup of two or more ESSA's (100), wherein the BMS's of the PCC's (160) of the individual ESSA's (100) will engage in a master/slave communication with each other, which will result into the total amount of BMS's to be combined and act as one single BMS, whereby this combined singular BMS will manage the entire custom setup.
